# EUROPEAN PATENT SPECIFICATION

(11) **EP 4 129 605 B1**
(45) Date of publication and mention of the grant of the patent: **31.12.2025**
(21) Application number: 22188999.1
(22) Date of filing: 05.08.2022
(51) Int. Cl.: B29B 17/02, B07C 5/10, B29K 23/00, B29L 7/00

(54) **METHOD AND DEVICE FOR SORTING MIXED PLASTIC PACKAGING WASTE INCLUDING FOILS**
VERFAHREN UND VORRICHTUNG ZUM SORTIEREN VON GEMISCHTEN KUNSTSTOFFFOLIENVERPACKUNGSABFÄLLEN
PROCÉDÉ ET DISPOSITIF DE TRI DE DÉCHETS D'EMBALLAGES PLASTIQUES MIXTES COMPRENANT DES FILMS

(30) Priority: 05.08.2021 BE 202105625
(43) Date of publication of application: 08.02.2023
(73) Proprietor: Indaver Plastics Recycling nv, 2830 Willebroek (BE)
(72) Inventor: GODDAERT, Eric, 2830 Willebroek (BE); MEYVIS, Eline, 2830 Willebroek (BE)
(74) Representative: Brantsandpatents bv

(56) References cited:
- EP-A1- 1 192 008
- EP-A2- 0 916 408
- WO-A1-2012/071112
- DE-A1- 19 637 550
- DE-A1- 4 414 112
- US-A- 5 162 383
- US-A1- 2012 048 975

## Description

### TECHNICAL FIELD

The invention relates to a method and a device for sorting mixed plastic packaging waste and sorted foils obtained therefrom.

### PRIOR ART

Packaging waste comes in many forms, including plastic packaging, metal packaging and beverage cartons. Also, the packaging waste may still include remnants of the original contents of the packaging, such as food residues. Different types of packaging waste are usually collected together and only afterwards offered for recycling. However, before proceeding to efficient recycling, such offered mixed packaging waste must first be sorted into the individual types of packaging waste.

WO2005120729 describes a method and associated system for sorting municipal solid waste into types of materials, the method comprising the following steps: sorting the solid waste into an oversize fraction, a midsize fraction and an undersize fraction; using at least manual-based, density-based, further size-based and metal-based sorting means to obtain a partial oversize fraction, a first partial midsize fraction and a second partial midsize fraction; combining the partial oversize fraction and the first partial midsize fraction to produce an oversize-midsize combined fraction, and combining the undersize fraction and the second partial midsize fraction to produce an undersize-midsize combined fraction; and using further sorting means to further sort the oversize-midsize combined fraction and the undersize-midsize combined fraction into types of materials.

In WO2005120729, sufficient measures are not taken to be able to sort foil waste from the municipal solid waste in an automated manner with the smallest possible need for manual subsequent sorting.

EP0916408 discloses a method and device for sorting mixtures of household and/or packaging waste.

US20120048975 describes a mechanized separation of mixed solid waste and recovery of recyclable products.

WO00/54885 relates to a method with improved separation efficiency in a triboelectric separator by adding media against which the components of the mixture will charge.

US5162383 concerns an abrasive process for polymer recovery.

WO2012/071112 discloses a method for mechanized separation of wet and dry materials in a solid waste stream.

DE19637550 is related to the processing of composites of solid organic, inorganic, metallic and mineral materials in a flowing stream.

DE4414112 describes a separation method for automated waste material separation, more specifically for packaging material recycling.

The present invention aims to solve at least some of the above problems or drawbacks. The aim of the invention is to provide a method which eliminates those disadvantages.

### SUMMARY OF THE INVENTION

In a first aspect, the invention relates to a method for sorting foil from mixed plastic packaging waste, according to claim 1. The use of the five different size fractions has the advantage of further separating the mixed plastic packaging waste. These different size fractions can go through a specifically adjusted sorting process, adjusted to each individual size fraction. The best quality of the sorted plastic packaging waste can be obtained here.

In addition, the continuity of the sorting process is guaranteed by first focusing on sorting the foil. This is very advantageous because foil can very easily get stuck in rotating parts of the sorting process because of its structure. This problem is prevented by separating the foil.

Preferred embodiments of the method are set out in claims 2-9.

A specific preferred embodiment of the invention relates to a method according to claim 6. This has the advantage that impurities, which can disrupt the sorting process, are separated from the sorted plastic packaging waste. Separating impurities from the sorted plastic packaging waste fractions ensures a greater degree of purity of the sorted plastic packaging waste. This ensures a better end result in the sorted foil from the mixed plastic packaging waste, with less manual subsequent sorting being required.

In a second aspect, the invention relates to a device for sorting foil from mixed plastic packaging waste, according to claim 10. Preferred embodiments of the device are set out in claims 11-12.

In a third aspect, the invention relates to sorted foil obtained from the mixed plastic packaging waste by using the method and the device according to claim 13.

### DESCRIPTION OF THE FIGURES

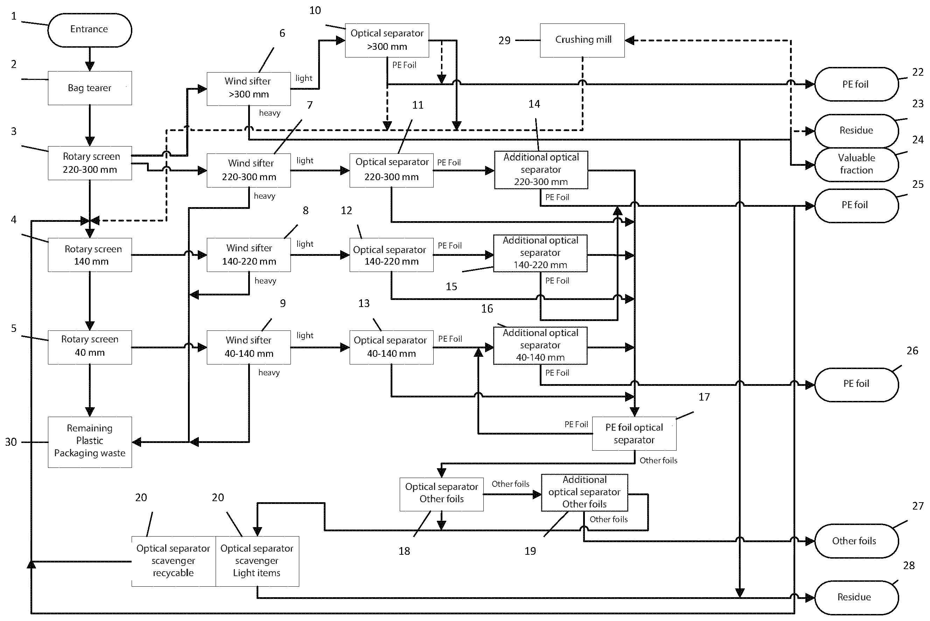

**Figure 1** shows a schematic representation of separating foil from mixed plastic packaging waste according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "packaging waste," as used in this text, is to be understood as waste from packaging, and in particular from packaging made of one or more materials selected from the group of cardboard, plastic, ferrous metals and/or non-ferrous metals. Said materials are characterized in that they are highly suitable for reuse. Non-limiting examples of packaging waste types are plastic foils, PP plastic waste, colorless or colored PET plastic waste, PE plastic waste, MPP plastic waste, non-ferrous metal waste, ferrous metal waste and beverage carton waste. Packaging waste can possibly carry impurities or residues from the original contents of a particular packaging, such as, for example, food residues.

The term "mixed plastic packaging waste," as used in this text, should be understood as a combination of at least two different types and kinds of plastic packaging waste.

The term "foil(s)," as used in this text, is to be understood as plastic packaging waste formed as a very thin layer of packaging material. Non-limiting examples of types of foils are colored or non-colored bags and packaging foil.

The term "PE foil" as used in this text is to be understood as a designation for packaging waste formed as a thin foil. With the foil made of polyethylene (PE).

The term "other foils" as used in this text should be understood as a designation for foil that is not made of polyethylene (PE).

The term "positively switched optical separator" as used in this text is to be understood as an optical separator that separates the materials on which the optical separator is focused.

The term "negative switched optical separator" as used in this text is to be understood as an optical separator that separates the materials on which the optical separator is not focused.

In a first aspect, the invention relates to a method for sorting mixed plastic packaging waste, comprising foil, according to claim 1.

In a more preferred embodiment of the method of claim 1, the lower density fractions each comprise at least 75 weight percent, more preferably at least 80 percent by weight, even more preferably at least 85 percent by weight, even more preferably at least 90 percent by weight, and most preferably at least 95 percent by weight foil relative to the total weight of each respective lower density fraction.

Removing foils at an early stage of a mixed plastic packaging waste sorting process is of great importance. Separating out the foil first prevents the foil from posing problems in the further separation of the remaining mixed plastic packaging waste. Because of its thin shape and high flexibility, the foil can quite quickly end up between rotating or other parts of separation machines, causing the respective separation machines to block and the separation of the mixed plastic packaging waste is delayed or even takes place sub-optimally or even in the worst case blocking the sorting process completely.

The size sorting is preferably carried out by means of a sieving means that easily allows to separate a material stream into more than two size fractions.

By dividing the mixed plastic packaging waste into several size fractions, the mixed plastic packaging waste is separated more based on its size. This is very advantageous in the further steps of the sorting process, which improves the quality of the sorting process. By dividing the mixed plastic packaging waste into size fractions, an individual sorting process can be designed for each size fraction, specifically tailored to the individual size fractions.

The preferred embodiment of the method as described in claim 2 has the effect that by separating the mixed plastic packaging waste into appropriate size fractions an optimum starting point is obtained for a general sorting of the mixed plastic packaging waste. The foils can thus be separated early in the sorting process.

The preferred embodiment of the method as described in claim 3 has the advantage that rotary screens offer a simple and reliable solution for sorting the mixed plastic packaging waste into different size fractions. Thanks to the simple setup, rotary screens can also process large volumes of material at once. The use of several rotary screens here has the advantage of having a better control when dividing the mixed plastic packaging waste into size fractions.

The preferred embodiment of the method as described in claim 4 has the effect that wind sifters can separate a material stream into fractions of lower and higher density via an air flow. The advantages of sorting by density via an air current is that no water is used and a separation percentage of at least 95% can be obtained with a low energy consumption, even at high capacities. In addition, a wind sifter requires little maintenance. This makes it easy to separate foils from the flow of mixed plastic packaging waste of any size fraction.

The preferred embodiment of the method as described in claim 5 has the effect that optical separators, preferably near-infrared (NIR) separators, can separate the lower density fraction into polymers with different properties, via near-infrared light projected onto the lower density fraction the mixed plastic packaging waste. However, this is advantageous because specific types of foil can be separated from the foil via the optical separators. For example, PE foils can be separated from the foils.

The preferred embodiment of the method as described in claim 6 has the effect of removing impurities from the sorted PE foil. With the impurities removed from the sorted plastic packaging waste, the degree of purity of the relevant sorted plastic packaging waste is higher. This reduces the need for manual post-sorting.

The preferred embodiment of the method as described in claim 7 offers the advantage that in this way the remaining plastic packaging waste, originating from the optical separators, undergoes an additional check. During the corresponding additional check, PE foils are separated out if necessary.

The preferred embodiment of the method as described in claim 8 is a next step in the sorting process. The remaining plastic packaging waste, which has been rejected by the optical separators of the PE foil sorting process, is then sorted into other foils by means of an optical separator. As with the PE foil sorting process, these sorted other foils are sorted by means of an additional optical separator, wherein the impurities which may still be present are separated from the sorted other foils.

The preferred embodiment of the method as described in claim 9 has the effect that the remaining plastic packaging waste is visually checked and further sorted if necessary. Depending on the orientation and mixing of the mixed plastic packaging waste, in particular the foils, a number of errors may occur during the sorting process. As a result, it is possible for a sorted material stream, for example the PE foils, to include incorrectly sorted materials. The manual post-sorting of the material streams in question ensures that the quality of the sorted material stream is guaranteed and carries out an additional check on the sorted material streams.

After the foil has been separated from the mixed plastic packaging waste, the remaining mixed plastic packaging waste is virtually completely free of foil, so that the remaining mixed plastic packaging waste can go through the following sorting process steps without any problems.

After the optical separators, the remaining mixed plastic packaging waste is fed to a final optical separator which separates the valuable materials from the remaining mixed plastic packaging material. The valuable material is fed back to the beginning of the sorting process, so that it has another chance to be sorted correctly. This is in fact advantageous by limiting the amount of mixed plastic packaging waste to be manually sorted, as described above, and making it as pure as possible.

The sorted types of foil are further stored in a respective storage place, after which the types of foils are pressed into bales.

In a second aspect, the invention relates to a device for sorting mixed plastic packaging waste, according to claim 10. Preferred embodiments of the device are set out in claims 11-12.

For the technical effects and advantages and/or preferred embodiments of the features of the device according to the second aspect of the invention, reference is made to the above-described embodiments of the method according to the first aspect of the invention. Therein are described the corresponding features which are also applicable to the device according to the second aspect of the invention.

In a third aspect, the invention relates to sorted foil obtained from mixed plastic packaging waste using a method according to the first aspect and the device according to the second aspect of the invention, according to claim 13.

In what follows, the invention is described by way of non-limiting examples or figures illustrating the invention, and which are not intended to and should not be interpreted as limiting the scope of the invention.

The invention will now be described in more detail with reference to the following non-limiting examples or figures.

### DESCRIPTION OF THE FIGURES

The invention will now be further elucidated with reference to the following figures, without otherwise being limited thereto.

For advantages and technical effects of elements described here in the description of the figures, reference is made to the advantages and technical effects of corresponding elements described above in the description.

A specific embodiment of the present invention relates to a method and a device for sorting mixed plastic packaging waste comprising foil, and sorted foil obtained therefrom.

Fig. 1 shows a schematic representation of a method and device for sorting mixed plastic packaging waste comprising foil, according to embodiments of the invention. Plastic bags filled with mixed packaging waste are loaded into a hopper of the dosing unit, for example using a wheel loader. The dosing unit in question comprises a bag tearer, in which the loaded bags are torn open so that the mixed plastic packaging waste is released. Bags thus torn open as such form an additional part of the mixed plastic packaging waste, and in particular form a type of foil. The mixed plastic packaging waste is then evenly distributed on the transport means by means of the dosing unit, for instance on an elevator belt, in order to in this way to obtain a constant and equal supply/throughput of the mixed plastic packaging waste. The mixed plastic packaging waste is then transported to three successive rotary screens that act as size-based sorting means.

In the three rotary screens, the mixed plastic packaging waste is separated by size into five size fractions:
- a first size fraction exiting a first rotary screen (5) has dimensions of less than 40 mm, comprising food residues and loose caps. The first size fraction is then stored in a store;
- a second size fraction exiting the first rotary screen (5) has dimensions of 40 mm to 140 mm, comprising plastic bottles and flasks, beverage cans, preserve tins, beverage cartons and foil, wherein the second size fraction is further sorted;
- a third size fraction exiting a second rotary screen (4) has dimensions from 140 mm to 220 mm, comprising plastic bottles and flasks, beverage cans, preserve tins, beverage cartons and foils, wherein the third size fraction is further sorted;
- a fourth size fraction exiting a third rotary screen (5) has dimensions from 220 mm to 300 mm, comprising bags, foils, and large containers, which oversize size fraction is further sorted;
   and
- a fifth size fraction exiting the third rotary screen (5) has dimensions greater than 300 mm, comprising foils, buckets, and other large containers, which oversize fraction is further sorted.

Said size fractions are then processed in five different streams. Relevant streams in the schematic representation of Fig. 1 are indicated by one or more arrows accompanied by a size interval referring to the respective size fractions.

In the processing stream (>300 mm) of the oversize size fraction, the mixed packaging waste is sent through a first wind sifter (6), which functions as a density-based sorting means. Hereby, the fifth size fraction is separated by density into a fifth lower-density fraction, comprising bags and foils, and a fifth higher-density fraction, comprising large containers. Said fifth lower-density fraction is then passed to an optical separator (10), more specifically an NIR separator, wherein the optical separator specifically separates PE foils from the lower density fraction. The PE foil waste is then taken to a sorting chamber (31).

In the sorting chamber (31) the PE foil waste of the fifth size fraction is again manually inspected and further sorted where necessary. This results in the first types of sorted plastic packaging waste, in particular: bags and PE foils and large containers. The fifth higher-density fraction, more specifically the large containers, are taken to a sorting chamber (31). In the sorting chamber (31), the fifth higher-density fraction is manually sorted, after which a residue, valuable and recycle fraction is obtained. The PE foil waste is stored in a PE foil store (22) provided for this purpose, the residue fraction is added to a residue store (28), the valuable fraction is stored in a valuable store provided for this purpose (24) and the recycle fraction is fed back to the beginning of the second rotary screen (4).

The processing streams (220-300 mm, 140-220 mm and 40-140 mm) of the second, third and fourth size fractions are each separately fed to a respective wind sifter (7, 8 and 9).

In the processing stream (220-300 mm) of the fourth size fraction, in a next step, the mixed plastic packaging waste of the large size fraction is separated by density by a second wind sifter (7). This results in a fourth lower-density fraction comprising bags and foils, and a fifth higher-density fraction comprising the remaining mixed plastic packaging waste. The foils of the fourth lower-density fraction are brought in a next step to an optical separator (11), wherein the optical separator (11) separates the PE foils from the fourth lower-density fraction.

Subsequently, in the processing stream (140-220 mm and 40-140 mm) of the second and third size fractions, the mixed plastic packaging waste of both size fractions is separated by density by a respective third and fourth wind sifter (8 and 9). This results in a second and third lower-density fraction comprising bags and foils, and a second and third higher-density fraction comprising the remaining mixed plastic packaging waste. Said lower-density fractions of both second and third size fractions are then each fed separately to optical separators (11 and 12). The optical separators will sort the PE foils from the foils.

The sorted PE foils from the second, third and fourth midsize size fractions are then each passed to an additional optical separator (14, 15 and 16). Each lower-density fraction, in particular the sorted PE foils, is checked again for impurities. The impurities are then separated from the sorted PE foils by means of the additional optical separators.

The sorted PE foils from the fourth size fraction (220-300 mm) and the sorted PE foils from the third size fraction (140-220 mm) are then transferred to the sorting chamber (31). The PE foils are checked manually again and are further sorted where necessary. Sorting in sorting chamber (31) results in a PE foil fraction, a residue fraction and a recycle fraction. The PE foil fraction then continues to the PE foil store (25), wherein the residue fraction is added to the residue store (28). The recycle fraction is again added to the entrance of the second rotary screen (4).

The PE foils sorted from the second midsize size fraction (40-140 mm) go via a separate line to the sorting booth (31) where they are again manually checked and sorted if necessary. Sorting results in a PE foil fraction and a residue fraction, wherein the PE foil fraction is then stored in the PE foil store (26) and wherein the residue fraction is added to the residue store (28).

Everything that has been rejected as PE foil by the optical separators (11-16), in particular the optical separators of the second, third and fourth size fractions, in particular the remaining mixed plastic packaging waste, is sent to a PE foil recovery optical separator (17). This optical separator (17) is responsible for again separating from the remaining mixed plastic packaging waste from the other aforementioned optical separators (11-16) any PE foil that may have been missed by the optical separators (11-16). The sorting of the PE foil recovery optical separator (17) results in a PE foil fraction and another foil fraction. The PE foil fraction is added to the entrance of the additional optical separator (16) which goes through the above-described process again. The other foil fraction is then passed to an optical separator (18), which is responsible for sorting the other foils. The other foils in turn go to an additional optical separator (19), which has the same function as the additional optical separators (14-16). The relevant optical separator (19) results in another foil fraction, a residue fraction and a recycle fraction. The other foil fraction is taken to the sorting booth (31), after which this fraction is manually checked and sorted if necessary. The residue fraction is added to the residue store (28), finally the recycle fraction is added to the entrance of the second rotary screen (4), so that this fraction can go through the described process again.

The remaining plastic packaging waste, after the optical separators (18, 19) of the other foil fraction, then goes to an optical scavenger (20). The optical scavenger (20) sorts the remaining plastic packaging waste into a recycle fraction and a residue fraction. The residue fraction is hereby added to the residue store (28) and the recycle fraction is added to the entrance of the second rotary screen (4).

The higher-density fraction of the second, third and fourth size fractions mainly comprises mixed plastic packaging waste, from which foils have been separated. This mixed plastic packaging waste is then further sorted together with the first size fraction (<40 mm) (30) (further sorting process not shown in Fig. 1).

By removing foils from the sorting process as early as possible, said foils of mixed plastic packaging waste cannot disrupt the further sorting process of the remaining mixed plastic packaging waste. The sorted foils are stored in a store provided for this purpose and afterwards pressed into bales (not shown in Fig. 1).

Furthermore, the higher-density fraction of the fifth size fraction (>300 mm) comprises an optional route, wherein the residue fraction is further passed to a bag tearer (29). The resulting packaging waste is then passed on to the entrance of the second rotary screen (4), the resulting packaging waste following the process described above.

## Claims

1. Method for sorting mixed plastic packaging waste comprising foils, wherein the mixed plastic packaging waste is first sorted by size into a number of size fractions and then by density into a number of density fractions, wherein sorting by size is carried out into five size fractions that differ from each other in size, **characterized in that** the four largest size fractions are further sorted by density, wherein a lower-density fraction and a higher-density fraction are obtained for each size fraction, wherein each lower-density fraction comprises at least 70 percent by weight foils, wherein the foils comprise PE foils and other foils.

2. Method according to claim 1, wherein the five size fractions comprise a first size fraction with dimensions less than 40 mm, a second size fraction with dimensions from 40 mm to 140 mm, a third size fraction with dimensions from 140 to 220 mm, a fourth size fraction with dimensions from 220 to 300 mm and a fifth size fraction with dimensions greater than 300 mm.

3. Method according to claim 1 or 2, wherein the sorting in to size fractions is carried out by means of a plurality of rotary screens (3, 4, 5).

4. Method according to any of the preceding claims 1-3, wherein the sorting by density is carried out by means of a plurality of wind sifters (6, 7, 8, 9).

5. Method according to any of the preceding claims 1-4, wherein the mixed plastic packaging waste is separated by means of an optical separator (10, 11, 12, 13) from the lower-density fractions originating from the second, third, fourth and fifth size fractions, wherein the optical separator (10, 11, 12, 13) separates PE foils from the mixed plastic packaging waste, resulting in sorted PE foils, and remaining mixed plastic packaging waste.

6. Method according to claim 5, wherein the sorted PE foils are sorted again by means of an additional optical separator (14, 15, 16), wherein the additional optical separator (14, 15, 16) separates impurities from the sorted PE foils.

7. Method according to claims 5 or 6, wherein PE foils are separated from the remaining mixed plastic packaging waste originating from the optical separators (10, 11, 12, 13, 14 ,15, 16) by means of an optical separator (17).

8. Method according to any of the preceding claims 5-7, wherein other foils are separated from the remaining mixed plastic packaging waste by means of an optical separator (18), wherein the other foils are further sorted again by means of an additional optical separator (19), wherein the additional optical separator (19) separates impurities from the sorted other foils.

9. Method according to any of the preceding claims 5-8, wherein the sorted PE foils and the sorted other foils originating from the size fractions are further checked manually.

10. Device for sorting mixed plastic packaging waste comprising foils, the device comprising three rotary screens (3, 4 5), suitable as size-based sorting means and four wind sifters (6, 7, 8, 9), suitable as density-based sorting means, **characterized in that** a third rotary screen (3) is configured for separating a fifth size fraction and a fourth size fraction with smaller dimensions than the fifth size fraction from the mixed plastic packaging waste, wherein a second rotary screen (4) is configured for separating a third size fraction with smaller dimensions than the fourth size fraction from residual waste from the third rotary screen (3), wherein a first rotary screen (5) is configured for separating a second size fraction with smaller dimensions than the third size fraction and a first size fraction with smaller dimensions than the second size fraction from residual waste from the second rotary screen (4), wherein a first wind sifter (6) is configured for separating the fifth size fraction in a fifth lower-density fraction and a fifth higher-density fraction, wherein a second wind sifter (7) is configured for separating the fourth size fraction in a fourth lower-density fraction and a fourth-density fraction, wherein a third wind sifter (8) is configured for separating the third size fraction in a third lower-density fraction and a third higher-density fraction and wherein a fourth wind sifter (9) is configured for separating the second size fraction in a second lower-density fraction and a second higher-density fraction.

11. Device according to claim 10, the device further comprising one or more positively switched optical separators (10, 11, 12, 13), suitable for distinguishing different types of plastic packaging waste.

12. Device according to any of the preceding claims 10-11, wherein the device further comprises one or more negatively switched optical separators (14, 15, 16), suitable for distinguishing the impurities from sorted waste streams.

13. Use of the method according to any of claims 1-9 or the device according to any of claims 10-12 for obtaining foils from mixed plastic packaging waste.

## Patentansprüche

1. Verfahren zum Sortieren gemischten Kunststoffverpackungsabfalls, der Folien umfasst, wobei der gemischte Kunststoffverpackungsabfall zuerst nach Größe in eine Anzahl von Größenfraktionen und dann nach Dichte in eine Anzahl von Dichtefraktionen sortiert wird, wobei das Sortieren nach Größe mit fünf Größenfraktionen ausgeführt wird, die sich in der Größe voneinander unterscheiden, **dadurch gekennzeichnet, dass** die vier größten Größenfraktionen weiter nach Dichte sortiert werden, wobei für jede Größenfraktion eine Fraktion mit geringerer Dichte und eine Fraktion mit höherer Dichte gewonnen werden, wobei jede Fraktion mit geringerer Dichte zu mindestens 70 Gewichtsprozent Folien umfasst, wobei die Folien PE-Folien und andere Folien umfassen.

2. Verfahren nach Anspruch 1, wobei die fünf Größenfraktionen eine erste Größenfraktion mit Abmessungen von weniger als 40 mm, eine zweite Größenfraktion mit Abmessungen von 40 mm bis 140 mm, eine dritte Größenfraktion mit Abmessungen von 140 bis 220 mm, eine vierte Größenfraktion mit Abmessungen von 220 bis 300 mm und eine fünfte Größenfraktion mit Abmessungen von mehr als 300 mm umfassen.

3. Verfahren nach Anspruch 1 oder 2, wobei das Sortieren in Größenfraktionen mittels mehrerer Rotationssiebe (3, 4, 5) ausgeführt wird.

4. Verfahren nach einem der vorhergehenden Ansprüche 1 bis 3, wobei das Sortieren nach Dichte mittels mehrerer Windsichter (6, 7, 8, 9) ausgeführt wird.

5. Verfahren nach einem der vorhergehenden Ansprüche 1 bis 4, wobei der gemischte Kunststoffverpackungsabfall mittels einer optischen Trenneinrichtung (10, 11, 12, 13) von den aus der zweiten, der dritten, der vierten und der fünften Größenfraktion stammenden Fraktionen mit geringerer Dichte getrennt wird, wobei die optische Trenneinrichtung (10, 11, 12, 13) die PE-Folien von dem gemischten Kunststoffverpackungsabfall trennt, was aussortierte PE-Folien und verbleibender gemischter Kunststoffverpackungsabfall erhalten werden.

6. Verfahren nach Anspruch 5, wobei die aussortierten PE-Folien mittels einer zusätzlichen optischen Trenneinrichtung (14, 15, 16) erneut sortiert werden, wobei die zusätzliche optische Trenneinrichtung (14, 15, 16) Fremdstoffe von den aussortierten PE-Folien trennt.

7. Verfahren nach Anspruch 5 oder 6, wobei die PE-Folien mittels einer optischen Trenneinrichtung (17) von dem restlichen gemischten Kunststoffverpackungsabfall, der von den optischen Trenneinrichtungen (10, 11, 12, 13, 14, 15, 16) stammt, getrennt werden.

8. Verfahren nach einem der vorhergehenden Ansprüche 5 bis 7, wobei mittels einer optischen Trenneinrichtung (18) andere Folien von dem restlichen gemischten Kunststoffverpackungsabfall getrennt werden, wobei die anderen Folien erneut mittels einer zusätzlichen optischen Trenneinrichtung (19) weiter sortiert werden, wobei die zusätzliche optische Trenneinrichtung (19) Fremdstoffe von den aussortierten anderen Folien trennt.

9. Verfahren nach einem der vorhergehenden Ansprüche 5 bis 8, wobei die aussortierten PE-Folien und die aussortierten anderen Folien, die von den Größenfraktionen stammen, manuell weiter geprüft werden.

10. Vorrichtung zum Sortieren gemischten Kunststoffverpackungsabfalls, der Folien umfasst, wobei die Vorrichtung drei Rotationssiebe (3, 4, 5), die als größenbasierte Sortiermittel geeignet sind, und vier Windsichter (6, 7, 8, 9), die als dichtebasierte Sortiermittel geeignet sind, umfasst, **dadurch gekennzeichnet, dass** ein drittes Rotationssieb (3) dafür gestaltet ist, eine fünfte Größenfraktion und eine vierte Größenfraktion mit kleineren Abmessungen als die fünfte Größenfraktion von dem gemischten Kunststoffverpackungsabfall zu trennen, wobei ein zweites Rotationssieb (4) dafür gestaltet ist, eine dritte Größenfraktion mit kleineren Abmessungen als die vierte Größenfraktion von dem Restabfall aus dem dritten Rotationssieb (3) zu trennen, wobei ein erstes Rotationssieb (5) dafür gestaltet ist, eine zweite Größenfraktion mit kleineren Abmessungen als die dritte Größenfraktion und eine erste Größenfraktion mit kleineren Abmessungen als die zweite Größenfraktion von Restabfall aus dem zweiten Rotationssieb (4) zu trennen, wobei ein erster Windsichter (6) dafür gestaltet ist, die fünfte Größenfraktion in eine fünfte Fraktion mit geringerer Dichte und eine fünfte Fraktion mit höherer Dichte zu trennen, wobei ein zweiter Windsichter (7) dafür gestaltet ist, die vierte Größenfraktion in eine vierte Fraktion mit geringerer Dichte und eine vierte Fraktion mit höherer Dichte zu trennen, wobei ein dritter Windsichter (8) dafür gestaltet ist, die dritte Größenfraktion in eine dritte Fraktion mit geringerer Dichte und eine dritte Fraktion mit höherer Dichte zu trennen, und wobei ein vierter Windsichter (9) dafür gestaltet ist, die zweite Größenfraktion in eine zweite Fraktion mit geringerer Dichte und eine zweite Fraktion mit höherer Dichte zu trennen.

11. Vorrichtung nach Anspruch 10, wobei die Vorrichtung ferner eine oder mehrere positiv geschaltete optische Trenneinrichtungen (10, 11, 12, 13) umfasst, die geeignet sind, verschiedene Arten von Kunststoffverpackungsabfall zu unterscheiden.

12. Vorrichtung nach einem der vorhergehenden Ansprüche 10 bis 11, wobei die Vorrichtung ferner eine oder mehrere negativ geschaltete optische Trenneinrichtungen (14, 15, 16) umfasst, die geeignet sind, die Fremdstoffe von Strömen sortierten Abfalls zu unterscheiden.

13. Verwendung des Verfahrens nach einem der Ansprüche 1 bis 9 oder der Vorrichtung nach einem der Ansprüche 10 bis 12 zum Gewinnung von Folien aus gemischtem Kunststoffverpackungsabfall.

## Revendications

1. Procédé permettant de trier des déchets d'emballages plastiques mélangés comprenant des feuilles, dans lequel les déchets d'emballages plastiques mélangés sont d'abord triés par taille en un certain nombre de fractions granulométriques, puis par densité en un certain nombre de fractions de densité, dans lequel le tri par taille est effectué en cinq fractions granulométriques différentes les unes des autres, **caractérisé en ce que** les quatre fractions granulométriques les plus grandes sont ensuite triées par densité, dans lequel une fraction de densité inférieure et une fraction de densité supérieure sont obtenues pour chaque fraction granulométrique, dans lequel chaque fraction de densité inférieure comprend au moins 70 pour cent en poids de feuilles, dans lequel les feuilles comprennent des feuilles de PE et d'autres feuilles.

2. Procédé selon la revendication 1, dans lequel les cinq fractions granulométriques comprennent une première fraction granulométrique avec des dimensions inférieures à 40 mm, une deuxième fraction granulométrique avec des dimensions comprises entre 40 mm et 140 mm, une troisième fraction granulométrique avec des dimensions comprises entre 140 et 220 mm, une quatrième fraction granulométrique avec des dimensions comprises entre 220 et 300 mm et une cinquième fraction granulométrique avec des dimensions supérieures à 300 mm.

3. Procédé selon la revendication 1 ou 2, dans lequel le tri en fractions granulométriques est effectué au moyen de plusieurs cribles rotatifs (3, 4, 5).

4. Procédé selon l'une quelconque des revendications précédentes 1 à 3, dans lequel le tri par densité est effectué au moyen d'une pluralité de séparateurs à air (6, 7, 8, 9).

5. Procédé selon l'une quelconque des revendications précédentes 1 à 4, dans lequel les déchets d'emballages plastiques mélangés sont séparés au moyen d'un séparateur optique (10, 11, 12, 13) à partir des fractions de densité inférieure provenant des deuxième, troisième, quatrième et cinquième fractions granulométriques, dans lequel le séparateur optique (10, 11, 12, 13) sépare les feuilles de PE des déchets d'emballages plastiques mélangés, ce qui permet d'obtenir des feuilles de PE triées, et des déchets d'emballages plastiques mélangés restants.

6. Procédé selon la revendication 5, dans lequel les feuilles de PE triées sont à nouveau triées au moyen d'un séparateur optique supplémentaire (14, 15, 16), dans lequel le séparateur optique supplémentaire (14, 15, 16) sépare les impuretés des feuilles de PE triées.

7. Procédé selon les revendications 5 ou 6, dans lequel les feuilles de PE sont séparées du reste des déchets d'emballages plastiques mélangés provenant des séparateurs optiques (10, 11, 12, 13, 14, 15, 16) au moyen d'un séparateur optique (17).

8. Procédé selon l'une quelconque des revendications précédentes 5 à 7, dans lequel d'autres feuilles sont séparées des déchets d'emballages plastiques mélangés restants au moyen d'un séparateur optique (18), dans lequel les autres feuilles sont à nouveau triées au moyen d'un séparateur optique supplémentaire (19), dans lequel le séparateur optique supplémentaire (19) sépare les impuretés des autres feuilles triées.

9. Procédé selon l'une quelconque des revendications 5 à 8 précédentes, dans lequel les feuilles en PE triées et les autres feuilles triées provenant des fractions granulométriques sont encore contrôlées manuellement.

10. Dispositif permettant de trier des déchets d'emballages plastiques mélangés comprenant des feuilles, le dispositif comprenant trois cribles rotatifs (3, 4, 5), qui constituent des moyens de tri basés sur la taille, et quatre séparateurs à air (6, 7, 8, 9), qui constituent des moyens de tri basés sur la densité, **caractérisé en ce qu'**un troisième crible rotatif (3) est configuré pour séparer une cinquième fraction granulométrique et une quatrième fraction granulométrique avec des dimensions inférieures à la cinquième fraction granulométrique à partir des déchets d'emballages plastiques mélangés, dans lequel un deuxième crible rotatif (4) est configuré pour séparer une troisième fraction granulométrique avec des dimensions inférieures à la quatrième fraction granulométrique à partir des déchets résiduels provenant du troisième crible rotatif (3), dans lequel un premier crible rotatif (5) est configuré pour séparer une deuxième fraction granulométrique avec des dimensions inférieures à la troisième fraction granulométrique et une première fraction granulométrique avec des dimensions inférieures à la deuxième fraction granulométrique à partir des déchets résiduels provenant du deuxième crible rotatif (4), dans lequel un premier séparateur à air (6) est configuré pour séparer la cinquième fraction granulométrique en une cinquième fraction de densité inférieure et une cinquième fraction de densité supérieure, dans lequel un deuxième séparateur à air (7) est configuré pour séparer la quatrième fraction granulométrique en une quatrième fraction de densité inférieure et une quatrième fraction de densité supérieure, dans lequel un troisième séparateur à air (8) est configuré pour séparer la troisième fraction granulométrique en une troisième fraction de densité inférieure et une troisième fraction de densité supérieure, et dans lequel un quatrième séparateur à air (9) est configuré pour séparer la deuxième fraction granulométrique en une deuxième fraction de densité inférieure et une deuxième fraction de densité supérieure.

11. Dispositif selon la revendication 10, le dispositif comprenant en outre un ou plusieurs séparateurs optiques à commutation positive (10, 11, 12, 13), aptes à distinguer différents types de déchets d'emballages plastiques.

12. Dispositif selon l'une quelconque des revendications précédentes 10 et 11, dans lequel le dispositif comprend en outre un ou plusieurs séparateurs optiques à commutation négative (14, 15, 16), aptes à distinguer les impuretés de flux de déchets triés.

13. Utilisation du procédé selon l'une quelconque des revendications 1 à 9 ou dispositif selon l'une quelconque des revendications10 à 12 pour obtenir des feuilles à partir de déchets d'emballages plastiques mélangés.
